# EUROPÄISCHE PATENTANMELDUNG

(11) **EP 4 285 740 A1**
(43) Veröffentlichungstag der Anmeldung: **06.12.2023**
(21) Anmeldenummer: 23175617.2
(22) Anmeldetag: 26.05.2023
(51) Int. Cl.: A23L 27/00, A23L 29/30, C12C 5/02, C12C 11/11, C12C 12/04, C12G 3/06, C12G 3/08, C12H 3/02

(54) **BIERSIRUP**

(30) Priorität: 03.06.2022 DE 102022114205
(71) Anmelder: Joachim, Christian, 93055 Regensburg (DE)
(72) Erfinder: Joachim, Christian, 93055 Regensburg (DE)
(74) Vertreter: Hannke Bittner & Partner mbB Regensburg

(57) **Zusammenfassung**

Die vorliegende Erfindung betrifft ein flüssiges Lebensmittel, insbesondere einen Sirup, wobei das flüssige Lebensmittel aus und/oder mit Bier hergestellt ist und/oder Bier enthält und weiterhin zusätzlichen Zucker, Malzextrakt und Bierwürze enthält. Erfindungsgemäß beinhaltet das flüssige Lebensmittel bezogen auf einen Liter des zur Herstellung des flüssigen Lebensmittels eingesetzten Bieres zusätzlichen Zucker im Bereich von 250 bis 400 g, Malzextrakt im Bereich von 0.5 bis 4 cl und Bierwürze im Bereich von 2 bis 6 cl.

## Beschreibung

Die vorliegende Erfindung bezieht sich auf ein flüssiges Lebensmittel, insbesondere auf einen Sirup und ein Verfahren zu dessen Herstellung.

Aus dem Stand der Technik sind Bierkonzentrate bekannt, welche einer hochkonzentrierten Bierwürze entsprechen. Diese ergeben bei Verdünnung mit Wasser eine Bierwürze, wie sie aus klassischen Brauprozessen bekannt ist, welche anschließend mit einer geeigneten Bierhefe zu Bier vergoren werden kann. Zur Verfeinerung von Speisen und/oder Getränken ist ein solches Bierkonzentrat allerdings nur bedingt geeignet aufgrund der hohen Konzentration an Aromastoffen, Bitterstoffen und dergleichen, wodurch es vor der Verwendung einer starken Verdünnung bedarf. Weiterhin ist die Herstellung eines solchen Bierkonzentrates aufwendig, da der Wasseranteil der Bierwürze fast völlig entfernt werden muss.

Weiterhin sind aus dem Stand der Technik Bieraromen bekannt, welche zur Verfeinerung von Lebensmitteln wie Getränken, Backwaren, Speiseeis und dergleichen verwendet werden können. Da es sich allerdings bei diesen Aromen ebenfalls um hochkonzentrierte Stoffe handelt, scheidet eine direkte Anwendung aus. Weiterhin handelt es sich bei diesen Bieraromen oft um synthetisch hergestellte Stoffe, was nicht dem Reinheitsgebot entspricht.

Weiterhin können die oben genannten Bierkonzentrate bzw. Bieraromen nicht aus fertig gebrauten Bier gewonnen werden und weisen auf keinen Alkoholgehalt auf.

Aus dem Stand der Technik ist somit kein insbesondere flüssiges Lebensmittel bekannt, welches aus Bier herstellbar ist und direkt auf Speisen und Getränke ohne Verdünnung anwendbar ist, um diesen einen typischen würzigen Biergeschmack zu verleihen

Daher stellt sich die vorliegende Erfindung die Aufgabe ein flüssiges Lebensmittel, insbesondere einen Sirup bereitzustellen, welches ausgehend von einem Bier herstellbar ist, über einen alkoholischen Anteil verfügt und direkt ohne eine nötige Verdünnung zur Verfeinerung von Speisen und Getränken eingesetzt werden kann. Erreicht wird diese Aufgabe erfindungsgemäß durch ein flüssiges Lebensmittel nach dem unabhängigen Schutzanspruch. Vorteilhafte Ausführungsformen und Weiterbildungen sind Gegenstand der Unteransprüche

Ein erfindungsgemäßes flüssiges Lebensmittel, insbesondere ein Sirup ist aus und/oder mit Bier hergestellt ist und/oder enthält Bier. Weiterhin enthält das flüssige Lebensmittel zusätzlichen Zucker, Malzextrakt und Bierwürze. Erfindungsgemäß beinhaltet das flüssige Lebensmittel bezogen auf einen Liter des zur Herstellung des flüssigen Lebensmittels eingesetzten Bieres zusätzlichen Zucker im Bereich von 250 bis 400 g, Malzextrakt im Bereich von 0.5 bis 4 cl und Bierwürze im Bereich von 2 bis 6 cl.

Bevorzugt handelt es sich bei dem flüssigen Lebensmittel um einen Sirup, welcher ausgehend von Bier herstellbar ist. Mit anderen Worten handelt es sich hierbei um einen Biersirup. Bevorzugt beinhaltet der Sirup neben dem eingesetzten Bier nur zusätzlichen Zucker, Malzextrakt und Bierwürze.

Unter zusätzlichem Zucker ist in diesem Zusammenhang zu verstehen, dass während der Herstellung des Sirups ausgehend von Bier Zucker hinzugefügt wird. Sofern nicht explizit anderweitig angegeben beziehen sich sämtliche Angaben in Bezug auf Zucker bzw. den Zuckergehalt im Rahmen dieser Anmeldung auf den zusätzlich hinzugefügten Zucker und haben nichts mit dem Zuckergehalt des zur Herstellung des Sirups verwendeten Bieres oder dem Gesamtzuckergehalt des Sirups zu tun.

Bei einer vorteilhaften Ausführungsform beinhaltet das flüssige Lebensmittel bezogen auf einen Liter des zur Herstellung des flüssigen Lebensmittels eingesetzten Bieres mehr als 280 g, bevorzugt mehr als 300 g und besonders bevorzugt mehr als 320 g und/oder weniger als 370 g, bevorzugt weniger als 350 g und besonders bevorzugt weniger als 340 g zusätzlichen Zucker beinhaltet.

Bevorzugt handelt es sich bei dem zusätzlichen Zucker um einen Bio-Zucker. Bevorzugt ist der zusätzliche Zucker ausgewählt aus einer Gruppe von Zuckern, welche Haushaltszucker, Rohrzucker, Rübenzucker, Fruchtzucker, Traubenzucker, Milchzucker, Malzzucker, Maiszucker, Invertzucker und dergleichen umfasst.

Bei einer bevorzugten Ausführungsform handelt es sich bei dem Malzextrakt um Röstmalzextrakt. Bevorzugt handelt es sich bei dem Röstmalzextrakt um ein getrocknetes (festes) Malzextrakt. Bevorzugt handelt es sich bei dem Röstmalzextrakt um einen flüssigen Malzextrakt. Weiterhin ist denkbar weitere Malzextrakte, wie z.B. Dr. Klaus Bio Gerstenmalz einzusetzen.

Bei einer bevorzugten Ausführungsform beinhaltet das flüssige Lebensmittel bezogen auf einen Liter des zur Herstellung des flüssigen Lebensmittels eingesetzten Bieres mehr als 1 cl, bevorzugt mehr als 1.5 cl und besonders bevorzugt mehr als 1.8 cl und/oder weniger als 3 cl, bevorzugt weniger als 2.5 cl und besonders bevorzugt weniger als 2.3 cl Malzextrakt.

Bei einer bevorzugten Ausführungsform handelt es sich bei der Bierwürze um dunkle Bierwürze. Bevorzugt handelt es sich bei der Bierwürze um ein Bierwürze-Konzentrat. Es wäre auch denkbar andere Bierwürzen einzusetzen, beispielsweise helle Bierwürze. Bevorzugt handelt es sich bei der Bierwürze um eine Flüssigkeit.

Bei einer vorteilhaften Ausführungsform beinhaltet das flüssige Lebensmittel bezogen auf einen Liter des zur Herstellung des flüssigen Lebensmittels eingesetzten Bieres mehr als 2.5 cl, bevorzugt mehr als 3 cl und bevorzugt mehr als 3.5 cl und/oder weniger als 5.5 cl, bevorzugt weniger als 5 cl und besonders bevorzugt weniger als 4.5 cl Bierwürze.

Bevorzugt handelt es sich bei dem zur Herstellung des flüssigen Lebensmittels verwendeten Bier um ein dunkles Bier und besonders bevorzugt um ein dunkles Starkbier. Bei einer vorteilhaften Ausführungsform weist das zur Herstellung des flüssigen Lebensmittels eingesetzte Bier eine Stammwürze von mehr als 14 °P, bevorzugt mehr als 16 °P und besonders bevorzugt mehr als 18 °P und/oder weniger als 21 °P, bevorzugt weniger als 20 °P und besonders bevorzugt weniger als 19 °P auf.

Bei einer vorteilhaften Ausführungsform weist das zur Herstellung des flüssigen Lebensmittels eingesetzte Bier einen Alkoholgehalt von mehr als 6 Vol.-%, bevorzugt mehr als 7.5 Vol.-% und besonders bevorzugt mehr als 9 Vol.-% und/oder weniger als 13 Vol.-%, bevorzugt weniger als 11.5 Vol.-% und besonders bevorzugt weniger als 10 Vol.-% auf.

Bei einer vorteilhaften Ausführungsform weist das flüssige Lebensmittel einen geringeren Alkoholgehalt als das zur Herstellung des flüssigen Lebensmittels eingesetzten Bier auf und der Alkoholgehalt des flüssigen Lebensmittels ist höher als 0.5 Vol.-%, bevorzugt höher als 1 Vol.-% und besonders bevorzugt höher als 1.5 Vol.-% und niedriger als 3 Vol.-%, bevorzugt niedriger als 2.5 Vol.-% und besonders bevorzugt niedriger als 2 Vol.-%.

Die vorliegende Erfindung ist weiterhin gerichtet auf ein Verfahren zur Herstellung eines flüssigen Lebensmittels, insbesondere eines Sirups, wobei das flüssige Lebensmittel aus und/oder mit Bier hergestellt wird und/oder Bier enthält und weiterhin zusätzlichen Zucker, Malzextrakt und Bierwürze enthält. Ein erfindungsgemäßes Verfahren umfasst die folgenden Schritte. In einem ersten Schritt wird ein (geeignetes) Bier bereitgestellt. Bevorzugt wird ein Bier bereitgestellt, welches eine wie oben beschriebene Stammwürze und einen wie oben beschriebenen Alkoholgehalt aufweist. Bevorzugt handelt es sich bei dem Bier um ein speziell hierfür gebrautes Bier, wie weiter unten im Rahmen eines Ausführungsbeispiels näher beschrieben wird.

In einem nächsten Schritt wird das Bier bis zum Aufkochen des Bieres erhitzt. Bevorzugt wird das Bier (in einem ersten Schritt) auf mindestens auf 65 °C, bevorzugt auf mindestens 70 °C und maximal auf 80 °C und bevorzugt maximal auf 75 °C erhitzt und anschließend (in einem zweiten Schritt) langsam weiter bis zum Siedepunkt erhitzt. Bevorzugt erfolgt das Aufheizen im ersten Schritt innerhalb von 15 bis 20 Minuten und das Aufheizen im zweiten Schritt innerhalb von 15 bis 20 Minuten.

Im nächsten Schritt erfolgt die Zugabe von Zucker, Malzextrakt und Bierwürze bevorzugt unter ständigem Rühren. Bevorzugt erfolgte eine Zugabe von Zucker, Malzextrakt und Bierwürze simultan oder in einer vorgegebenen Reihenfolge. Bei einem vorteilhaften Verfahren erfolgt zuerst die Zugabe des Zuckers innerhalb von 5 bis 10 Minuten, im Anschluss daran die Zugabe der Bierwürze innerhalb von ca. 5 Minuten und als Letztes erfolgt die Zugabe des Malzextraktes innerhalb von 5 bis 10 Minuten. Bevorzugt erfolgt die Zugabe von Zucker, Bierwürze und Malzextrakt separat voneinander.

Im nächsten Schritt wird weitergekocht. Bevorzugt wird nach der Zugabe von Zucker, Malzextrakt und Bierwürze für 15 bis 45 Minuten und bevorzugt für 20 bis 30 Minuten weitergekocht. Bevorzugt fällt die Temperatur während des Weiterkochens nicht unter 86 °C, bevorzugt nicht unter 84 °C und besonders bevorzugt nicht unter 82 °C.

Im nächsten Schritt erfolgt eine Abfüllung im heißen Zustand. Bevorzugt erfolgt die Abfüllung bei einer Temperatur höher als 70 °C, bevorzugt höher als 72 °C und besonders bevorzugt höher als 75 °C erfolgt.

Im letzten Schritt wird das flüssige Lebensmittel langsam abgekühlt. Bevorzugt wird das flüssige Lebensmittel über Nacht bei Zimmertemperatur abgekühlt.

Bevorzugt wird ein Bier bereitgestellt, welches eine wie oben beschriebene Stammwürze und einen wie oben beschriebenen Alkoholgehalt aufweist. Bevorzugt handelt es sich bei dem Bier um ein speziell hierfür gebrautes Bier.

In einem ersten Anwendungsbeispiel wird Bier verwendet, welches wie nachfolgend beschrieben gebraut werden kann. Die Pfannevollmenge des zu brauenden Bieres beträgt 300 L, das Brauwasser im Hauptguss umfasst 200 L und die Nachgüsse erfolgen nach Bedarf. Die Schüttung umfasst 64 kg Weyermann^{®} Bio Pilsner Malz, 7.5 kg Weyermann^{®} EG-Bio Wiener Malz, 0.75 kg Weyermann^{®} Caramünch^{®} Typ 2 und 2.75 kg Weyermann^{®} Caraaroma^{®}.

Die Maischarbeit erfolgt bei einer Einmaischtemperatur von 52 °C mit einer 1. Rast von 10 min bei 52 °C. Im nächsten Schritt wird auf 62 °C erhitzt und es erfolgt eine 2. Rast bei 62 °C für 45 min. Im nächsten Schritt wird auf 68 °C erhitzt und es erfolgt eine 3. Rast bei 68 °C für 15 min. Im nächsten Schritt wird auf 72 °C erhitzt und es erfolgt eine 4. Rast bei 72 °C für 20 min. Das Abmaischen erfolgt bei 78 °C.

Im nächsten Schritt erfolgt das Würzekochen mit Hopfengabe. Die Kochzeit beträgt 90 min. Bei Kochbeginn erfolgt eine Hopfengabe von 200 g Magnum Pellet Typ 90 (Hopfen und mehr GmbH). Bei Kochmitte erfolgt eine Zugabe von 100 g Tradition Pellet Typ 90 (Hopfen und mehr GmbH). Bei Kochende erfolgt eine Zugabe von 100 g Tradition Pellet Typ 90 (Hopfen und mehr GmbH).

Für die Gärung wird eine Anstelltemperatur von 24 °C und die Trockenhefe Nottingham Ale verwendet. Es erfolgt eine Flaschengärung zunächst bei 20 °C für eine Woche und anschließend bei einer Temperatur unter 10 °C für mehrere Wochen.

Ca. 6 Wochen nach dem Brautag wird das Bier auf 72 °C erhitzt und langsam zum Kochen gebracht. Pro Liter Bier werden unter ständigem Rühren ca. 330 g Bio-Zucker, ca. 2 cl Röstmalzextrakt und 4 cl dunkle Bierwürze hingegeben. Nach dem Aufkochen bei ca. 98 °C wird für ca. 20 bis 30 Minuten weitergekocht, wobei die Temperatur nicht unter 82 °C fallen darf. Im Anschluss wird der Sirup heiß abgefüllt und langsam abgekühlt.

In einem weiteren Anwendungsbeispiel für die Herstellung größerer Mengen des flüssigen Lebensmittels (Sirup) muss die oben genannte Rezeptur (erstes Anwendungsbeispiel) modifiziert werden.

Ausgehend vom dem oben genannten Verhältnis der Schüttung (64 kg Weyermann^{®} Bio Pilsner Malz, 7.5 kg Weyermann^{®} EG-Bio Wiener Malz, 0.75 kg Weyermann^{®} Caramünch^{®} Typ 2 und 2.75 kg Weyermann^{®} Caraaroma^{®}) muss der Gehalt an Weyermann^{®} Caraaroma^{®} um 2 % und der Gehalt an Weyermann^{®} EG-Bio Wiener Malz um 3 % erhöht werden.

Die Maischarbeit muss ebenfalls dahingehend angepasst werden, dass die Maischarbeit bei einer Einmaischtemperatur von 52 °C mit einer 1. Rast von 15 min bei 52 °C erfolgt. Im nächsten Schritt wird auf 65 °C erhitzt und es erfolgt eine 2. Rast bei 65 °C für 50 min. Im nächsten Schritt wird auf 70 °C erhitzt und es erfolgt eine 3. Rast bei 70 °C für 20 min. Im nächsten Schritt wird auf 75 °C erhitzt und es erfolgt eine 4. Rast bei 75 °C für 25 min. Das Abmaischen erfolgt bei 78 °C.

Eine weitere Anpassung ist bei dem Verfahrensschritt der Gärung erforderlich. Hierbei wird anstelle der Trockenhefe Nottingham Ale eine trainierte flüssige Hefe verwendet. Zusätzlich wird während des Gärvorgangs innerhalb von 8 bis 48 Stunden mehrmals belüftet.

Auf diesem Weg wird ein Bier erhalten, welches eine Stammwürze von wenigstens 18.9 °P und einen höheren Alkoholgehalt aufweist als im ersten Anwendungsbeispiel, was eine Weiterverarbeitung des Biers zu dem Sirup in einem größeren Maßstab ermöglicht.

## Patentansprüche

1. Flüssiges Lebensmittel, insbesondere Sirup, wobei das flüssige Lebensmittel aus und/oder mit Bier hergestellt ist und/oder Bier enthält und weiterhin zusätzlichen Zucker, Malzextrakt und Bierwürze enthält
**dadurch gekennzeichnet, dass**
das flüssige Lebensmittel bezogen auf einen Liter des zur Herstellung des flüssigen Lebensmittels eingesetzten Bieres zusätzlichen Zucker im Bereich von 250 bis 400 g, Malzextrakt im Bereich von 0.5 bis 4 cl und Bierwürze im Bereich von 2 bis 6 cl beinhaltet.

2. Flüssiges Lebensmittel nach Anspruch 1,
**dadurch gekennzeichnet, dass**
das flüssige Lebensmittel bezogen auf einen Liter des zur Herstellung des flüssigen Lebensmittels eingesetzten Bieres mehr als 280 g, bevorzugt mehr als 300 g und besonders bevorzugt mehr als 320 g und/oder weniger als 370 g, bevorzugt weniger als 350 g und besonders bevorzugt weniger als 340 g zusätzlichen Zucker beinhaltet.

3. Flüssiges Lebensmittel nach wenigstens einem der vorangegangenen Ansprüche, **dadurch gekennzeichnet, dass**
es sich bei dem Malzextrakt um Röstmalzextrakt handelt.

4. Flüssiges Lebensmittel nach wenigstens einem der vorangegangenen Ansprüche, **dadurch gekennzeichnet, dass**
das flüssige Lebensmittel bezogen auf einen Liter des zur Herstellung des flüssigen Lebensmittels eingesetzten Bieres mehr als 1 cl, bevorzugt mehr als 1.5 cl und besonders bevorzugt mehr als 1.8 cl und/oder weniger als 3 cl, bevorzugt weniger als 2.5 cl und besonders bevorzugt weniger als 2.3 cl Malzextrakt beinhaltet.

5. Flüssiges Lebensmittel nach wenigstens einem der vorangegangenen Ansprüche, **dadurch gekennzeichnet, dass**
es sich bei der Bierwürze um dunkle Bierwürze handelt.

6. Flüssiges Lebensmittel nach wenigstens einem der vorangegangenen Ansprüche, **dadurch gekennzeichnet, dass**
das flüssige Lebensmittel bezogen auf einen Liter des zur Herstellung des flüssigen Lebensmittels eingesetzten Bieres mehr als 2.5 cl, bevorzugt mehr als 3 cl und bevorzugt mehr als 3.5 cl und/oder weniger als 5.5 cl, bevorzugt weniger als 5 cl und besonders bevorzugt weniger als 4.5 cl Bierwürze beinhaltet.

7. Flüssiges Lebensmittel nach wenigstens einem der vorangegangenen Ansprüche, **dadurch gekennzeichnet, dass**
das zur Herstellung des flüssigen Lebensmittels eingesetzte Bier eine Stammwürze von mehr als 14 °P, bevorzugt mehr als 16 °P und besonders bevorzugt mehr als 18 °P und/oder weniger als 21 °P, bevorzugt weniger als 20 °P und besonders bevorzugt weniger als 19 °P aufweist.

8. Flüssiges Lebensmittel nach wenigstens einem der vorangegangenen Ansprüche, **dadurch gekennzeichnet, dass**
das zur Herstellung des flüssigen Lebensmittels eingesetzte Bier einen Alkoholgehalt von mehr als 6 Vol.-%, bevorzugt mehr als 7.5 Vol.-% und besonders bevorzugt mehr als 9 Vol.-% und/oder weniger als 13 Vol.-%, bevorzugt weniger als 11.5 Vol.-% und besonders bevorzugt weniger als 10 Vol.-% aufweist.

9. Flüssiges Lebensmittel nach wenigstens einem der vorangegangenen Ansprüche, **dadurch gekennzeichnet, dass**
das flüssige Lebensmittel einen geringeren Alkoholgehalt als das zur Herstellung des flüssigen Lebensmittels eingesetzten Bier aufweist und der Alkoholgehalt des flüssigen Lebensmittels höher als 0.5 Vol.-%, bevorzugt höher als 1 Vol.-% und besonders bevorzugt höher als 1.5 Vol.-% und/oder niedriger als 3 Vol.-%, bevorzugt niedriger als 2.5 Vol.-% und besonders bevorzugt niedriger als 2 Vol.-% ist.

10. Verfahren zur Herstellung eines flüssigen Lebensmittels, insbesondere eines Sirups, wobei das flüssige Lebensmittel aus und/oder mit Bier hergestellt wird und/oder Bier enthält und weiterhin zusätzlichen Zucker, Malzextrakt und Bierwürze enthält und die folgenden Schritte umfasst:
- Bereitstellen von Bier;
- Erhitzen des Bieres bis zum Aufkochen des Bieres;
- Zugabe von Zucker, Malzextrakt und Bierwürze bevorzugt unter ständigem Rühren;
- Weiterkochen;
- Abfüllung im heißen Zustand;
- langsames Abkühlen.

11. Verfahren nach dem vorhergehenden Anspruch,
**dadurch gekennzeichnet, dass**
nach der Zugabe von Zucker, Malzextrakt und Bierwürze für 15 bis 45 Minuten und bevorzugt für 20 bis 30 Minuten weitergekocht wird.

12. Verfahren nach wenigstens einem der vorhergehenden Ansprüche,
**dadurch gekennzeichnet, dass**
das Bier auf mindestens auf 65 °C, bevorzugt auf mindestens 70 °C und maximal auf 80 °C und bevorzugt maximal auf 75 °C erhitzt wird und anschließend langsam weiter bis zum Siedepunkt erhitzt wird.

13. Verfahren nach wenigstens einem der vorhergehenden Ansprüche,
**dadurch gekennzeichnet, dass**
die Temperatur während des Weiterkochens nicht unter 86 °C, bevorzugt nicht unter 84 °C und besonders bevorzugt nicht unter 82 °C fällt.

14. Verfahren nach wenigstens einem der vorhergehenden Ansprüche,
**dadurch gekennzeichnet, dass**
die Abfüllung bei Temperatur höher als 70 °C, bevorzugt höher als 72 °C und besonders bevorzugt höher als 75 °C erfolgt.
